# EUROPEAN PATENT SPECIFICATION

(11) **EP 4 249 401 B1**
(45) Date of publication and mention of the grant of the patent: **17.07.2024**
(21) Application number: 23162894.2
(22) Date of filing: 20.03.2023
(51) Int. Cl.: B65F 3/00, B65F 3/04

(54) **LIFTING APPARATUS FOR EMPTYING REFUSE CONTAINERS**
HEBEVORRICHTUNG ZUM ENTLEEREN VON MÜLLBEHÄLTERN
APPAREIL DE LEVAGE ET DE VIDAGE DE CONTENEURS À ORDURES

(30) Priority: 22.03.2022 FI 20225250
(43) Date of publication of application: 27.09.2023
(73) Proprietor: Ab Närpes Trä & Metall - Oy Närpiön Puu ja Metalli, 64200 Närpes (FI)
(72) Inventor: Vikman, Lars-Johan, 64200 Närpes (FI)
(74) Representative: Kolster Oy Ab

(56) References cited:
- EP-A1- 1 491 464
- EP-A1- 1 921 026
- EP-A1- 3 020 657
- DE-A1- 102019 000 893

## Description

### BACKGROUND OF THE INVENTION

### FIELD OF THE INVENTION

This invention relates to a lifting apparatus of the kind recited in the preamble of claim 1.

Such a lifting apparatus is employed when emptying refuse containers into a refuse collection vehicle. The lifting apparatus is particularly intended for use in emptying refuse containers for more than one refuse fraction.

### DESCRIPTION OF PRIOR ART

As refuse sorting has evolved due to environmental and economic benefits of recycling, it has increased the demands for versatile refuse containers. This is especially true for refuse collecting sites, which do not have enough refuse volume or collection space to justify separate large refuse containers for each refuse fraction. In such scenarios it is beneficial to utilize secondary refuse containers that are housed inside a larger primary refuse container. These refuse containers may be further divided with internal dividers.

This development in refuse containers has in turn created a demand for efficient and simultaneous emptying of said refuse containers. As the primary refuse containers described above house secondary refuse containers, traditional lifting apparatuses of refuse collection vehicles are not able to perform the emptying operations effectively on them. Traditional lifting apparatuses require either that the refuse containers are emptied several times with the same lifting apparatus or that different refuse containers are emptied with different lifting apparatuses in different positions around the refuse collection vehicle. Besides being expensive, solutions having several lifting apparatuses are also laborious since the refuse containers must be emptied a plurality of times.

Previously there are also known solutions for lifting apparatuses of refuse collection vehicles intended for emptying the secondary refuse containers housed inside the primary refuse containers. However, these known solutions are prone to damaging the refuse containers during emptying operations, as the forces exerted on the refuse container are too high. Depending on the fraction, the sorted refuse in a single refuse container may be dense and heavy. When such refuse container is turned over with a known lifting apparatus, torque forces higher than the refuse container can handle are exerted on the refuse container causing it to be damaged. This is obviously disadvantageous and costly, as the damaged refuse containers must be replaced, and the spilled contents must be cleaned up.

Such a previously known solution is disclosed in EP1491464A1, for instance. The document discloses a lifting apparatus according to the preamble of claim 1, having a primary lifting device and a secondary lifting device for turning over and emptying the primary refuse container and the secondary refuse containers.

Respectively, the known methods for emptying secondary refuse containers housed inside larger primary refuse containers are lacking in aspects detailed above.

### SUMMARY OF THE INVENTION

An object of the present invention is to solve the above mentioned problems and to provide a lifting apparatus which better supports the refuse containers to be emptied, and to provide a method for emptying the refuse containers. These and other objects are achieved with a lifting apparatus according to independent claim 1.

Thanks to the fact that the lifting apparatus of a refuse collection vehicle comprises a support according to the characterizing part of the independent claim 1, the secondary refuse container is adequately supported during emptying, which results in improved longevity of the refuse containers.

Preferred embodiments of the invention are disclosed in the dependent claims.

Further advantages and details of the invention are disclosed in detail in the description below.

### BRIEF DESCRIPTION OF DRAWINGS

In the following the present invention will be described in closer detail by way of example and with reference to the attached drawings, in which
Figures 1 to 7 illustrate side views of an embodiment of the invention in different stages of its operation,
Figure 8 illustrates a back view of the embodiment of figures 1 to 7, the back view corresponding with the side view of figure 6,
Figure 9 illustrates a flowchart of an example method.

### DESCRIPTION OF AT LEAST ONE EMBODIMENT

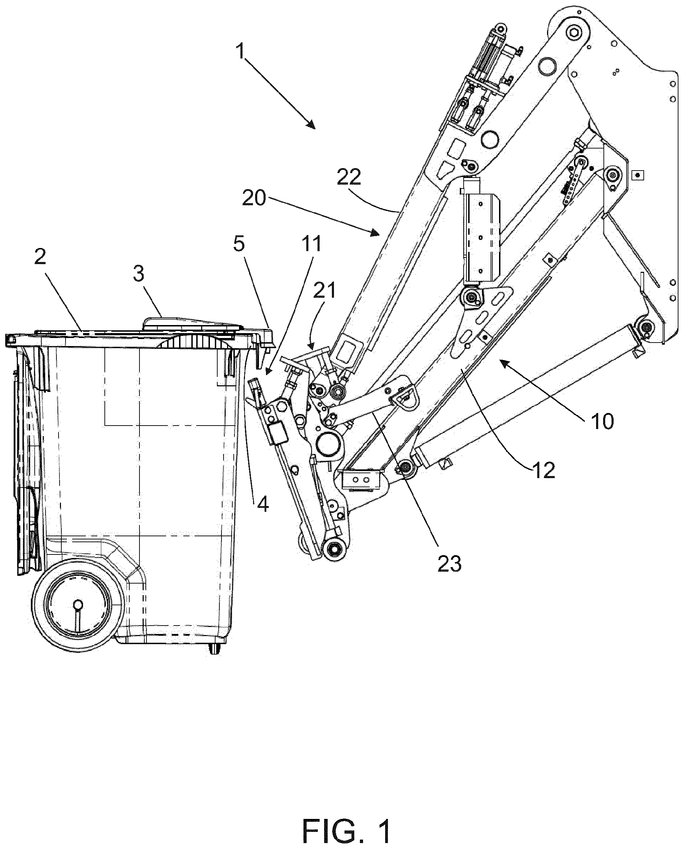

In the following description, the terms 'up', 'down', 'above', 'under' and so on, refer to directions relative to the lifting apparatus 1 or its constructional details as they are shown in the attached figures. The terms "front", "upper", and "lower" refer to directions relative to refuse containers 2, 3 as they are shown in figure 1.

The refuse collection vehicle comprising the lifting apparatus 1 is not shown in the figures or described in further detail.

In a present embodiment of the primary and secondary refuse containers 2, 3 illustrated in the figures 1 to 8, the refuse containers 2, 3 comprise lifting fittings 4, 5 that are horizontally outwardly protruding from an upper front edge of each refuse container 2, 3. The lifting fittings 5 provided on the secondary refuse container 3 protrude further than the lifting fittings 4 of the primary refuse container 2. This allows a secondary lifting device 20 to reach the lifting fittings 5 provided on the secondary refuse container 3 while it is housed inside the primary refuse container 2. However, also other refuse containers with different lifting fittings arranged in different fashion may be utilized. The refuse containers may also be provided in multiple sections or be internally divided for further separation of refuse fractions.

Figures 1 to 8 illustrate an embodiment of a lifting apparatus 1 in a refuse collection vehicle for turning over and emptying a primary refuse container 2, and at least one secondary refuse container 3 located inside the primary refuse container 2, into the refuse collection vehicle. The lifting apparatus 1 comprises a primary lifting device 10 arranged in the refuse collection vehicle, the primary lifting device 10 comprising a primary gripping device 11 for engaging lifting fittings 4 provided in the primary refuse container 2 and for lifting the primary refuse container 2. The lifting apparatus 1 further comprises at least a secondary lifting device 20 arranged in the refuse collection vehicle, the secondary lifting device 20 comprising a secondary gripping device 21 for engaging lifting fittings 5 provided at an upper part of the secondary refuse container 3, and for lifting the secondary container 3. Additionally, the lifting apparatus 1 comprises a respective lever arm 12, 22 in the primary and secondary lifting device 10, 20 for turning over the respective primary and secondary refuse containers 2, 3. The separate lifting devices 10, 20 allow each refuse container 2, 3 to be simultaneously lifted and then turned over preferably into separate collection bins located in the refuse collection vehicle. The collection bins may be located at different positions in the refuse collection vehicle, which positions can be accessed with the respective lifting devices 10, 20. The secondary lifting device 20 further comprises a support 23 which is movable in relation to the secondary lifting device 20, and an actuator 24 moving the movable support 23 to contact the secondary refuse container 3 when the secondary lifting device 20 has lifted the secondary refuse container 20 for supporting the secondary refuse container 3 during turning over at a position located below the upper part. This support allows the load exerted on the secondary refuse container 3 to be distributed more evenly, thus resulting in increased longevity of the secondary refuse container 3.

In the embodiment of figures 1 to 8, the primary lifting device 10 comprises at least two substantially parallel lever arms 12 that extend from the refuse collection vehicle in a direction behind the refuse collection vehicle. A crossbar provided with the primary gripping device is arranged in the lever arms 12. The primary lifting device 10 is arranged to use the primary gripping device 11 to engage with the lifting fittings 4 provided in the primary refuse container 2 for the purpose of then being able to lift and turn over the primary refuse container 2 relative to the refuse collection vehicle in order to empty the primary refuse container 2 into the refuse collection vehicle. Further, the secondary lifting device 20 comprises a lever arm 22, which like the lever arms 12 in the primary lifting device 10, extends in a direction behind the refuse collection vehicle and is pivoted relative to the refuse collection vehicle. The lever arm 22 respectively comprises the secondary gripping device 21 comprised in the secondary lifting device 20.

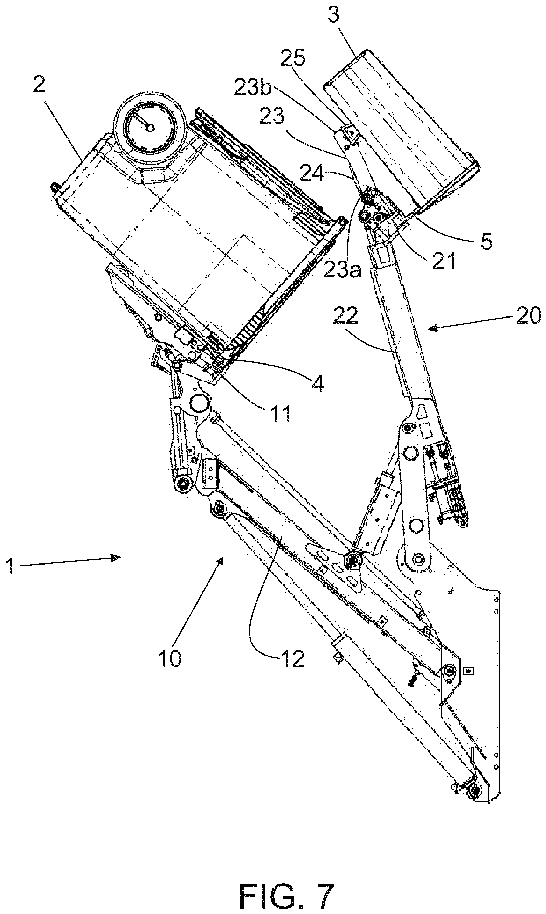

In the embodiment of figures 1 to 8, for easy conveyance of the secondary gripping device 21 to the lifting fittings 5 provided in the secondary refuse container 3, the secondary lifting device 20 is preferably pivotally fastened above the primary lifting device 10. Accordingly, as shown in figures 1 to 8, the travel path of the secondary lifting device 20 extends from its outer end taking a first end position at the primary gripping device 11 for engaging the lifting fittings 5 provided in the secondary refuse container 3 arranged inside the primary refuse container 2 to a second end position above the refuse collection vehicle according to figure 7 for turning over the secondary refuse container 3. In conformity with the primary lifting device 10, the secondary lifting device 20 is brought in movement with a jack device known per se. This device preferably comprises at least a regulating unit arranged to maneuver the lever arm 22 of the secondary lifting device 20.

In the embodiment of figures 1 to 8, in a first position of the support 23, the support 23 is at a distance from the refuse containers 2, 3, and in a second position of the support 23, the support 23 is in contact with the secondary refuse container 3. This allows the secondary refuse container 3 to be lifted out of the primary refuse container 2 without the support 23 interfering with movements of the refuse containers 2, 3 and be moved to support the secondary refuse container 3 when the secondary refuse container 3 is sufficiently exposed.

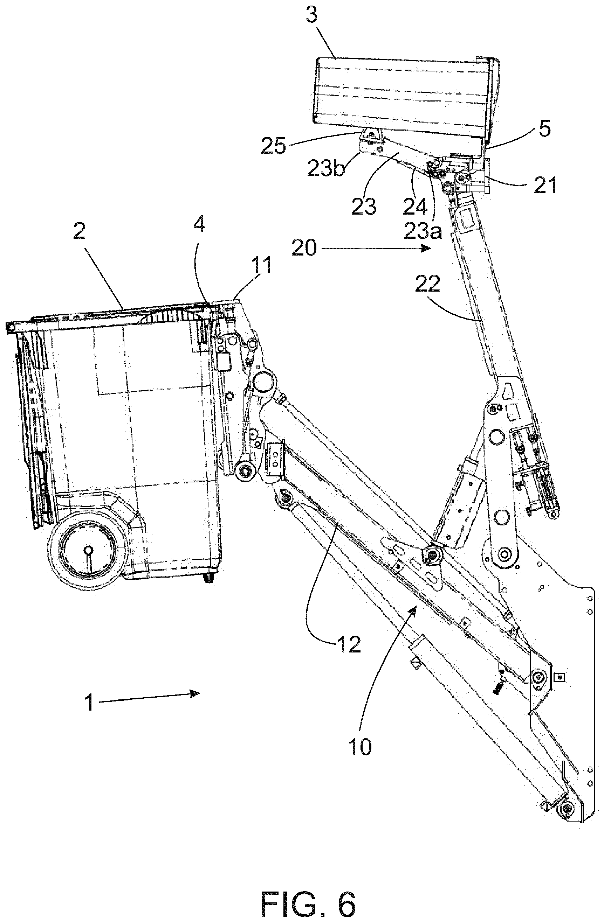

In the embodiment of figures 1 to 8, the support 23 contacts the secondary refuse container 3 on a front side of the secondary refuse container 3, which front side faces down when the secondary refuse container 3 is in a substantially horizontal position during turning over of the secondary refuse container 3 as seen in figure 6. This positioning of the support 23 is advantageous as it is on same side as the secondary lifting device 20 in respect to the secondary refuse container 3, simplifying the required design of the support 23 and the actuator 24. Further, the contact area of the support 23 on the secondary refuse container 3 is preferably in the lower half of the secondary refuse container 3. This allows the secondary refuse container 3 to be supported on both sides of its center of gravity when the secondary refuse container 3 is substantially in a horizontal position when being turned over as seen in figure 6. This is advantageous as it allows the load to be distributed more evenly on the secondary refuse container 3.

In the embodiment of figures 1 to 8, a first end 23a of the support 23 is pivotably hinged in the secondary lifting device 20, and rotation of the second end 23b of the support 23 about the hinge is actuated by the actuator 24. This is advantageous as it allows the second end 23b of the support 23 to be moved to and away from the secondary refuse container 3 with relatively small movement. Alternatively, the support 23 could be formed as a telescopic arm extending linearly from the secondary lifting device 20.

In the embodiment of figures 1 to 8, the support 23 comprises a bumper 25 on the second end 23b of the support 23. Preferably said bumper 25 comprises a hollow structure, which reduces the weight of the bumper 25 and enables it to be deformed if enough force is applied, thus protecting the secondary refuse container 3 from damage in such scenario. Preferably, the bumper 25 comprises elastic material, which further increases the force absorption of the bumper 25 and decreases the chances of the support 23 damaging the secondary refuse container 3.

Preferably the actuator 24 for moving the support is a hydraulic or a pneumatic cylinder or an electric motor. Each of which are easy to arrange on the lifting apparatus 1 and are able to provide sufficient power for moving and supporting the support 23.

In the embodiment of figures 1 to 8, the secondary gripping device 21 of the secondary lifting device 20 is suitable for engaging the lifting fittings 5 of the secondary refuse container 3 that are positioned at an upper front edge of the secondary refuse container 3. Preferably, said lifting fittings 5 protrude horizontally outwards past the primary refuse container 2. Further, the primary and secondary gripping devices 11, 21 preferably function with a clamping principle, wherein the lifting fittings 4, 5 are secured to the lifting devices 10, 20 by clamping the protruding lifting fittings 4, 5 between two parts of the gripping devices 11, 21. This clamping construction is advantageous as it provides a firm grip on the refuse containers 2, 3, which can also be visually confirmed by the operator during operation.

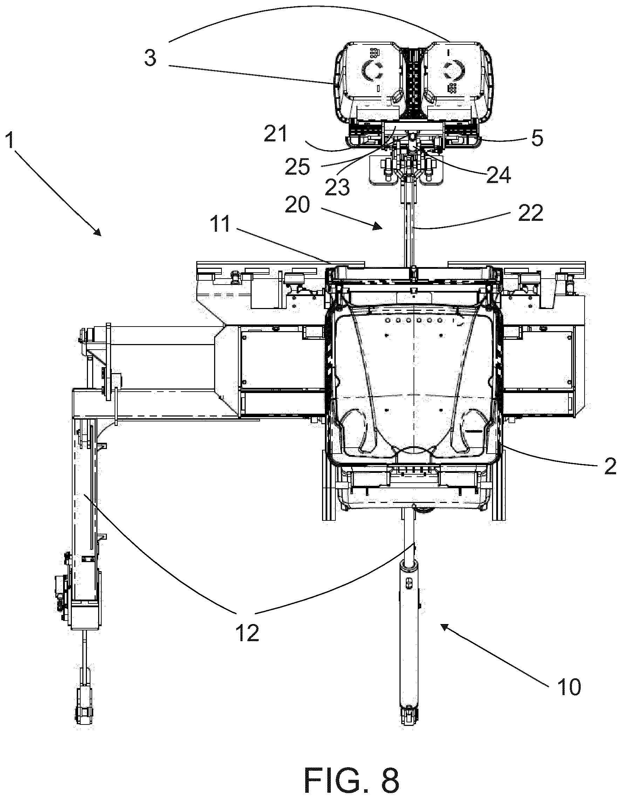

In the embodiment of figures 1 to 8, the primary refuse container 2 comprises two secondary refuse containers 3 inside the primary refuse container 2. However, the number of secondary refuse containers 3 may also be higher, or the secondary refuse containers 3 may be further internally divided. Preferably, the secondary refuse containers 3 comprise a common lifting fitting 5, which can be engaged with the secondary gripping device 21 as illustrated in figure 8. However, the secondary refuse containers 3 may also have separate lifting fittings 5. Preferably, the second end 23b of the support 23 is elongated such that it is suitable for supporting plurality of secondary refuse containers 3 side by side as seen in figure 8.

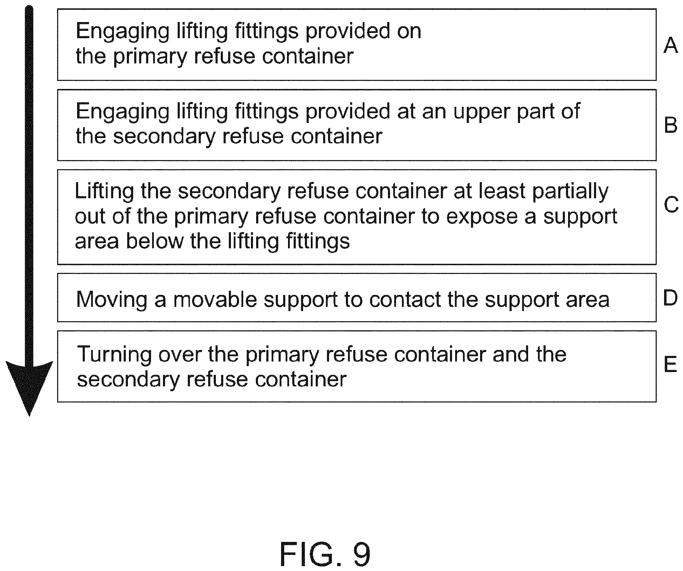

The flow chart in figure 9 illustrates a related method for emptying a primary refuse container 2 and a secondary refuse container 3 located inside the primary refuse container 2. The method comprises steps of A engaging lifting fittings 4 provided on the primary refuse container 2, B engaging lifting fittings 5 provided at an upper part of the secondary refuse container 3, C lifting the secondary refuse container 3 at least partially out of the primary refuse container 2 to expose a support area below the front edge, D moving a movable support 23 to contact the support area, and E turning over the primary refuse container 2 and the secondary refuse container 3. The steps are also visible in figures 1 to 8. These steps allow the primary and secondary refuse containers 2, 3 as described above to be efficiently and securely emptied. By utilizing the above steps, also damage done to the refuse containers 2, 3 can be minimized.

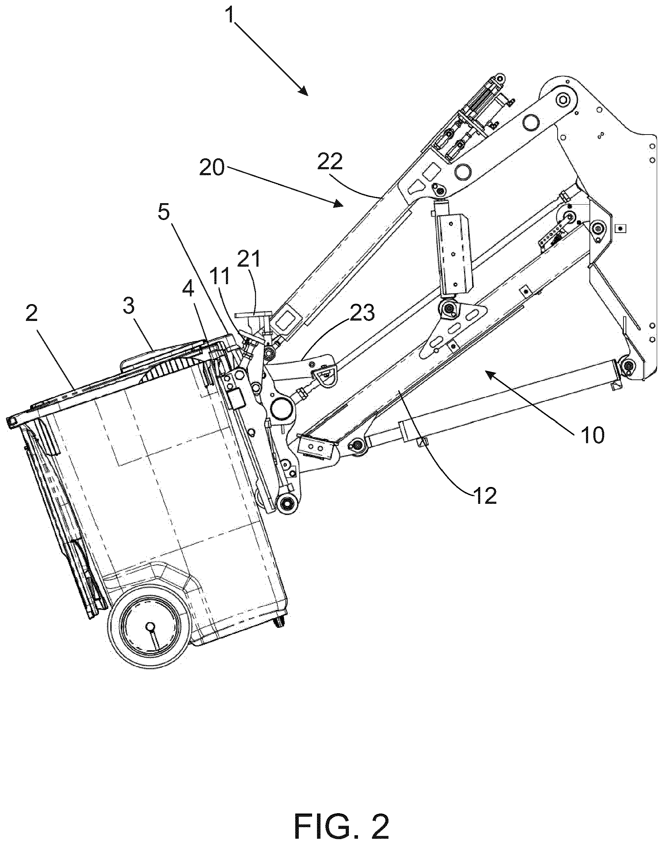

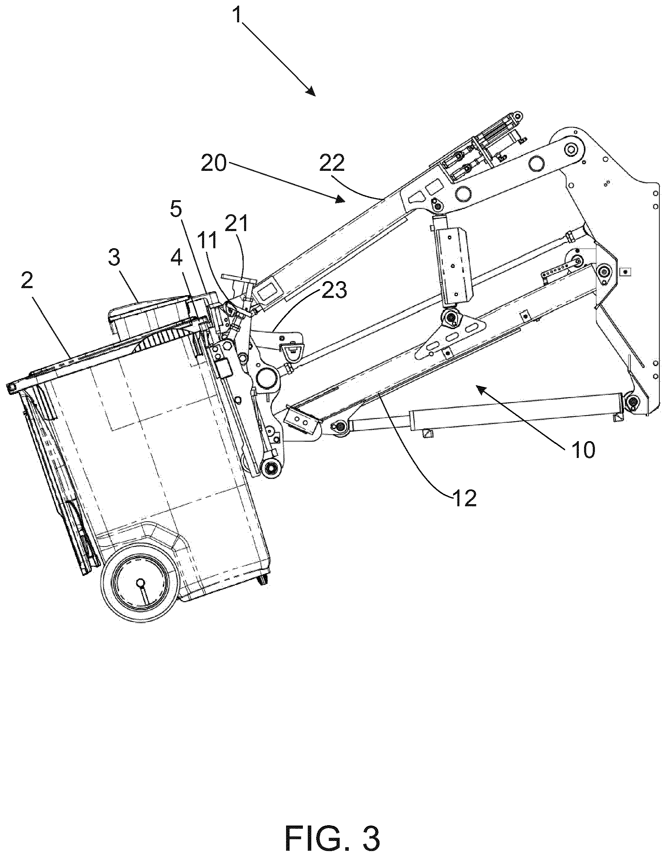

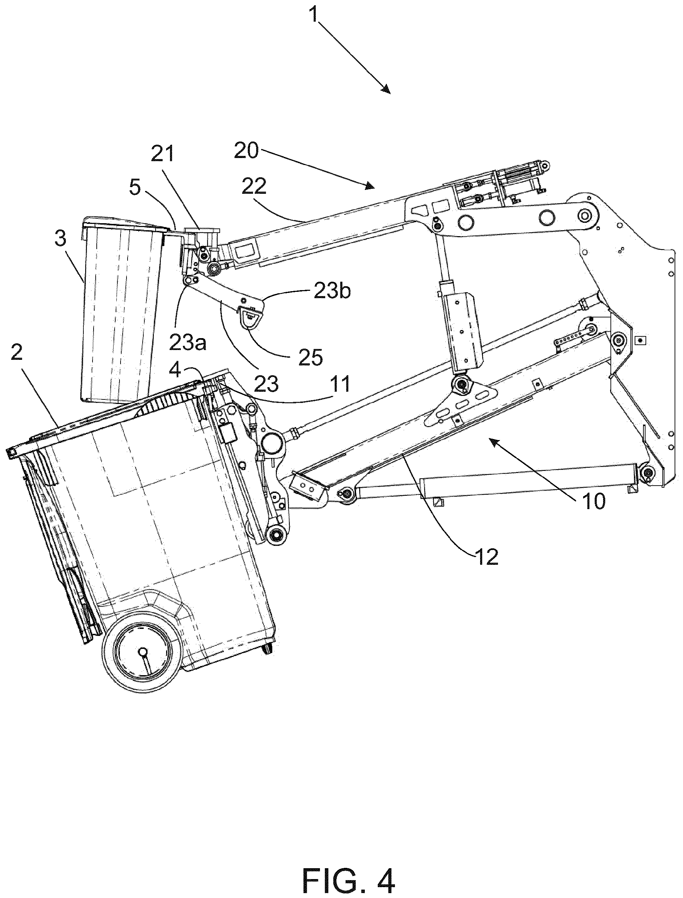

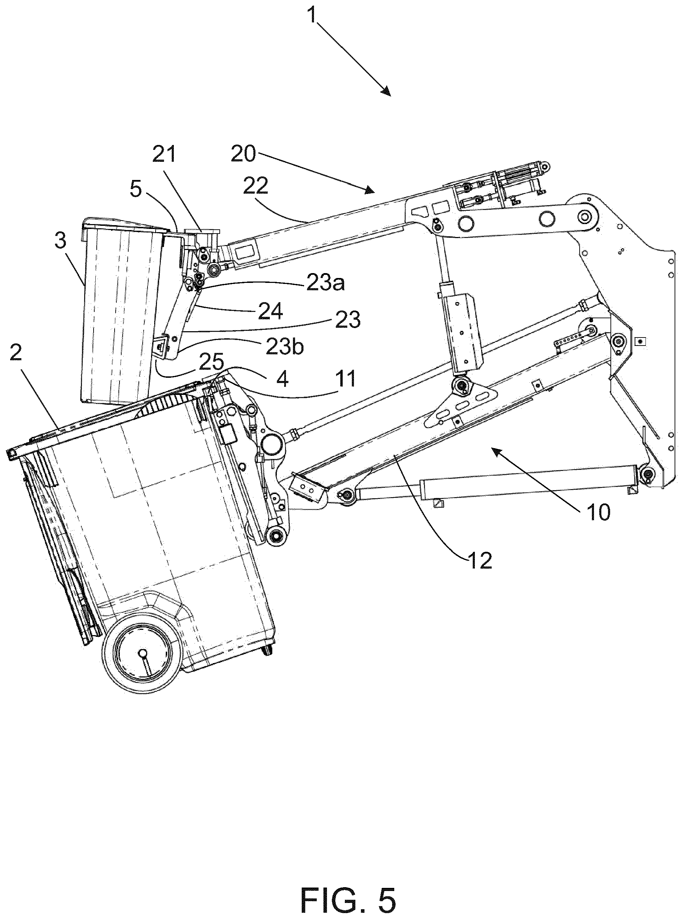

The method described above can be seen in greater detail through figures 1 to 8. Preferably to engage the lifting fittings 4 in step A, the primary lifting device 10 and particularly the primary gripping device 11 provided therein take a position alongside the primary refuse container 2, and the primary lifting device 10 is raised in order to engage the lifting fittings 4 as seen in figure 2. Once the lifting fittings 4 have been engaged, the lever arms 12 of the primary lifting device 10 are arranged to slightly lift the primary refuse container 2 to better expose the lifting fittings 5 of the secondary refuse container 3. This allows the secondary gripping device 21 to engage with said lifting fittings 5 in step B, after which the secondary refuse container 3 can be lifted out of the primary refuse container 2 with the use of lever arm 22 in secondary lifting device 20 in step C as seen in figures 3 and 4. Once the secondary refuse container 3 is exposed enough to allow the support 23 to be brought in contact with the secondary refuse container 3, the actuator 24 actuates the movement of the support 23 in step D, as seen in figures 4 and 5. Finally the refuse containers 2, 3 are lifted and turned over as illustrated in figures 6 and 7.

It is to be understood that the above description and the accompanying figures are only intended to illustrate the present invention. It will be obvious to a person skilled in the art that the invention can be varied and modified without departing from the scope of the invention as defined in the appended claims.

## Claims

1. A lifting apparatus (1) for a refuse collection vehicle for turning over and emptying a primary refuse container (2) , and at least one secondary refuse container (3) located inside the primary refuse container (2), into the refuse collection vehicle, the lifting apparatus (1) comprising:
- a primary lifting device (10) arranged in the refuse collection vehicle, the primary lifting device (10) comprising a primary gripping device (11) for engaging lifting fittings (4) provided in the primary refuse container (2) and for lifting the primary refuse container (2),
- at least a secondary lifting device (20) arranged in the refuse collection vehicle, the secondary lifting device (20) comprising a secondary gripping device (21) for engaging lifting fittings (5) provided at an upper part of the secondary refuse container (3), and for lifting the secondary container (3),
- a respective lever (12, 22) arm in the primary and secondary lifting device (10, 20) for turning over the respective primary and secondary refuse containers (2, 3),
**characterized in that** the secondary lifting device (20) further comprises:
- a support (23) which is movable in relation to the secondary lifting device (20), and
- an actuator (24) moving the movable support (23) to contact the secondary refuse container (3), when the secondary lifting device (20) has lifted the secondary refuse container (3), for supporting the secondary refuse container (3) at a position located below the upper part during turning over.

2. The lifting apparatus (1) according to claim 1, wherein in a first position of the support (23), the support (23) is at a distance from the primary and secondary refuse containers (2, 3), and
wherein, in a second position of the support (23), the support (23) is in contact with the secondary refuse container (3).

3. The lifting apparatus (1) according to any of the preceding claims, wherein the support (23) contacts the secondary refuse container (3) on front side of the secondary refuse container (3), which front side faces down when the secondary refuse container (3) is in a substantially horizontal position during turning over of the secondary refuse container (3).

4. The lifting apparatus (1) according to any of the preceding claims, wherein the support (23) contacts the secondary refuse container (3) in a lower half of the secondary refuse container (3).

5. The lifting apparatus (1) according to any of the preceding claims, wherein a first end (23a) of the support (23) is pivotably hinged in the secondary lifting device (20), and rotation of the second end (23b) of the support (23) about the hinge is actuated by the actuator (24).

6. The lifting apparatus (1) according to claim 5, wherein the support (23) comprises a bumper (25) on the second end (23b) of the support (23).

7. The lifting apparatus (1) according to claim 6, wherein the bumper (25) comprises elastic material.

8. The lifting apparatus (1) according to any of the preceding claims, wherein the actuator (24) for moving the support (23) is a hydraulic or a pneumatic cylinder.

9. The lifting apparatus (1) according to any of claims 1 to 7, wherein the actuator (24) for moving the support (23) is an electric motor.

10. The lifting apparatus (1) according to any of the preceding claims 5 to 7, wherein the second end (23b) of the support (23) is elongated such that it can support plurality of secondary refuse containers (3) side by side.

## Patentansprüche

1. Hebeeinrichtung (1) für ein Abfallsammelfahrzeug zum Umdrehen und Entleeren eines primären Abfallbehälters (2) und mindestens eines sekundären Abfallbehälters (3), der sich im primären Abfallbehälter (2) befindet, in das Abfallsammelfahrzeug, wobei die Hebeeinrichtung (1) Folgendes umfasst:
- eine primäre Hebevorrichtung (10), die im Abfallsammelfahrzeug angeordnet ist, wobei die primäre Hebevorrichtung (10) eine primäre Greifvorrichtung (11) zum Eingreifen in Hebebeschläge (4), die im primären Abfallbehälter (2) bereitgestellt sind, und zum Anheben des primären Abfallbehälters (2) umfasst,
- mindestens eine sekundäre Hebevorrichtung (20), die im Abfallsammelfahrzeug angeordnet ist, wobei die sekundäre Hebevorrichtung (20) eine sekundäre Greifvorrichtung (21) zum Eingreifen in Hebebeschläge (5), die in einem oberen Teil des sekundären Abfallbehälters (3) bereitgestellt sind, und zum Anheben des sekundären Abfallbehälters (3) umfasst,
- einen jeweiligen Hebel(12, 22)-Arm in der primären und sekundären Hebevorrichtung (10, 20) zum Umdrehen des jeweiligen primären und sekundären Abfallbehälters (2, 3),
**dadurch gekennzeichnet, dass** die sekundäre Hebevorrichtung (20) ferner Folgendes umfasst:
- eine Stütze (23), die mit Bezug auf die sekundäre Hebevorrichtung (20) bewegbar ist, und
- einen Aktuator (24), der die bewegbare Stütze (23) bewegt, um den sekundären Abfallbehälter (3) zu berühren, wenn die sekundäre Hebevorrichtung (20) den sekundären Abfallbehälter (3) angehoben hat, zum Stützen des sekundären Abfallbehälters (3) in einer Position, die sich während des Umdrehens unter dem oberen Teil befindet.

2. Hebeeinrichtung (1) nach Anspruch 1, wobei sich die Stütze (23) in einer ersten Position der Stütze (23) in einem Abstand vom primären und sekundären Abfallbehälter (2, 3) befindet, und
wobei die Stütze (23) in einer zweiten Position der Stütze (23) mit dem sekundären Abfallbehälter (3) in Kontakt ist.

3. Hebeeinrichtung (1) nach einem der vorhergehenden Ansprüche, wobei die Stütze (23) den sekundären Abfallbehälter (3) an einer Vorderseite des sekundären Abfallbehälters (3) berührt, wobei die Vorderseite nach unten weist, wenn sich der sekundäre Abfallbehälter (3) während des Umdrehens des sekundären Abfallbehälters (3) in einer im Wesentlichen horizontalen Position befindet.

4. Hebeeinrichtung (1) nach einem der vorhergehenden Ansprüche, wobei die Stütze (23) den sekundären Abfallbehälter (3) in einer unteren Hälfte des sekundären Abfallbehälters (3) berührt.

5. Hebeeinrichtung (1) nach einem der vorhergehenden Ansprüche, wobei ein erstes Ende (23a) der Stütze (23) über ein Scharnier schwenkbar mit der sekundären Hebevorrichtung (20) verbunden ist, und eine Drehung des zweiten Endes (23b) der Stütze (23) um das Scharnier durch den Aktuator (24) bewirkt wird.

6. Hebeeinrichtung (1) nach Anspruch 5, wobei die Stütze (23) am zweiten Ende (23b) der Stütze (23) einen Stoßfänger (25) umfasst.

7. Hebeeinrichtung (1) nach Anspruch 6, wobei der Stoßfänger (25) ein elastisches Material umfasst.

8. Hebeeinrichtung (1) nach einem der vorhergehenden Ansprüche, wobei der Aktuator (24) zum Bewegen der Stütze (23) ein Hydraulik- oder ein Pneumatikzylinder ist.

9. Hebeeinrichtung (1) nach einem der Ansprüche 1 bis 7, wobei der Aktuator (24) zum Bewegen der Stütze (23) ein Elektromotor ist.

10. Hebeeinrichtung (1) nach einem der vorhergehenden Ansprüche 5 bis 7, wobei das zweite Ende (23b) der Stütze (23) langgestreckt ist, derart, dass es eine Vielzahl von sekundären Abfallbehältern (3) nebeneinander stützen kann.

## Revendications

1. Appareil de levage (1) pour un véhicule de collecte d'ordures pour retourner et vider un conteneur à ordures principal (2), et au moins un conteneur à ordures secondaire (3) positionné à l'intérieur du conteneur à ordures principal (2), dans le véhicule de collecte d'ordures, l'appareil de levage (1) comprenant :
- un dispositif de levage principal (10) agencé dans le véhicule de collecte d'ordures, le dispositif de levage principal (10) comprenant un dispositif de préhension principal (11) pour mettre en prise des raccords de levage (4) prévus dans le conteneur à ordures principal (2) et pour lever le conteneur à ordures principal (2),
- au moins un dispositif de levage secondaire (20) agencé dans le véhicule de collecte d'ordures, le dispositif de levage secondaire (20) comprenant un dispositif de préhension secondaire (21) pour mettre en prise des raccords de levage (5) prévus au niveau d'une partie supérieure du conteneur à ordures secondaire (3) et pour lever le conteneur secondaire (3),
- un bras de levier (12, 22) respectif dans les dispositifs de levage principal et secondaire (10, 20) pour retourner les conteneurs à ordures principal et secondaire (2, 3) respectifs,
**caractérisé en ce que** le dispositif de levage secondaire (20) comprend en outre :
- un support (23) qui est mobile par rapport au dispositif de levage secondaire (20), et
- un actionneur (24) déplaçant le support mobile (23) pour mettre en contact le conteneur à ordures secondaire (3), lorsque le dispositif de levage secondaire (20) a levé le conteneur à ordures secondaire (3), pour supporter le conteneur à ordures secondaire (3) dans une position située au-dessous de la partie supérieure pendant le retournement.

2. Appareil de levage (1) selon la revendication 1, dans lequel, dans une première position du support (23), le support (23) est à une distance des conteneurs à ordures principal et secondaire (2,3), et
dans lequel, dans une seconde position du support (23), le support (23) est en contact avec le conteneur à ordures secondaire (3).

3. Appareil de levage (1) selon l'une quelconque des revendications précédentes, dans lequel le support (23) est en contact avec le conteneur à ordures secondaire (3) sur le côté avant du conteneur à ordures secondaire (3), lequel côté avant est orienté vers le bas lorsque le conteneur à ordures secondaire (3) est dans une position sensiblement horizontale pendant le retournement du conteneur à ordures secondaire (3).

4. Appareil de levage (1) selon l'une quelconque des revendications précédentes, dans lequel le support (23) est en contact avec le conteneur à ordures secondaire (3) dans une moitié inférieure du conteneur à ordures secondaire (3).

5. Appareil de levage (1) selon l'une quelconque des revendications précédentes, dans lequel une première extrémité (23a) du support (23) est articulée de manière pivotante dans le dispositif de levage secondaire (20) et la rotation de la seconde extrémité (23b) du support (23) autour de la charnière est actionnée par l'actionneur (24).

6. Appareil de levage (1) selon la revendication 5, dans lequel le support (23) comprend un pare-chocs (25) sur la seconde extrémité (23b) du support (23).

7. Appareil de levage (1) selon la revendication 6, dans lequel le pare-chocs (25) comprend un matériau élastique.

8. Appareil de levage (1) selon l'une quelconque des revendications précédentes, dans lequel l'actionneur (24) pour déplacer le support (23) est un vérin hydraulique ou pneumatique.

9. Appareil de levage (1) selon l'une quelconque des revendications 1 à 7, dans lequel l'actionneur (24) pour déplacer le support (23) est un moteur électrique.

10. Appareil de levage (1) selon l'une quelconque des revendications 5 à 7, dans lequel la seconde extrémité (23b) du support (23) est allongée de sorte qu'elle peut supporter une pluralité de conteneurs à ordures secondaires (3) côte à côte.
